# EUROPEAN PATENT SPECIFICATION

(11) **EP 2 975 277 B1**
(45) Date of publication and mention of the grant of the patent: **08.08.2018**
(21) Application number: 15172683.3
(22) Date of filing: 18.06.2015
(51) Int. Cl.: F16C 11/06, F16C 23/04, F16C 33/74

(54) **BEARING ASSEMBLY HAVING SURFACE PROTRUSIONS AND A SEAL**
LAGERANORDNUNG MIT OBERFLÄCHENPROTRUSIONEN UND EINER DICHTUNG
ENSEMBLE PALIER COMPORTANT DES SAILLIES EN SURFACE ET JOINT D'ÉTANCHÉITÉ

(30) Priority: 18.06.2014 US 201462014032 P
(43) Date of publication of application: 20.01.2016
(73) Proprietor: Roller Bearing Company of America, Inc., Oxford, CT 06478 (US)
(72) Inventor: POLANCO, Moises, 2800 Delémont (CH)
(74) Representative: Bjerkéns Patentbyrå KB (Stockholm)

(56) References cited:
- DE-A1- 19 834 678
- DE-U- 7 011 118
- GB-A- 486 220
- US-A- 3 897 121
- US-A1- 2012 248 723

## Description

### FIELD OF THE INVENTION

The present invention relates generally to a bearing assembly, and more specifically to a bearing assembly having hubs which include circumferentially extending surface protrusions that each cooperate with a seal to inhibit the ingress of contaminants into the bearing.

### BACKGROUND OF THE INVENTION

A typical bearing includes an inner member disposed partially in an outer member. The inner member moves relative to the outer member. A common problem in the bearing industry is the entry of contaminants into a space between the inner member and the outer member of the bearing. These contaminants, such as dust, metallic particles and dirt, inhibit the ability of the bearing to function properly (i.e., inhibit reduction of friction).

One solution to this problem is the installation of a seal on the bearing. However, some seals do not keep all contaminants out of the bearing and can impair motion of the inner member relative to the outer member. In addition, movement of the inner member relative to the outer member can cause the seal to become dislodged. A means of preventing contaminant entry that would not impair relative motion of the inner member and the outer member and would better keep contaminants out of the bearing has long been sought in the industry.

GB 486 220 discloses (see in particular Fig. 1) a bearing assembly comprising an outer race 4 and a number of bearing blocks 5 and an inner ring 6 which is secured to a shaft 2. The bearing blocks 5 are tiltably supported on the inner ring 6. A rotating element 14 is secured to the shaft. The rotating element 14 has a surface depression and a surface protrusion positioned axially outward from the surface depression. The bearing assembly has two cap systems 10, 11, 12 which are secured to or carried by the outer ring 4. The cap system appears to extend axially outward beyond the surface protrusion.

### SUMMARY

The present invention resides in bearing assemblies as defined in claims 1 and 5.

In one embodiment, the circumferentially extending surface protrusions include corrosion resistant material.

### DESCRIPTION OF THE DRAWINGS

FIG. 1 is a front cross sectional view of a portion bearing assembly of the present invention;
FIG. 2 is an enlarged front cross sectional view of a portion of the bearing assembly of FIG. 1;
FIG. 3 is is a front cross sectional view of the bearing assembly of FIG. 1;

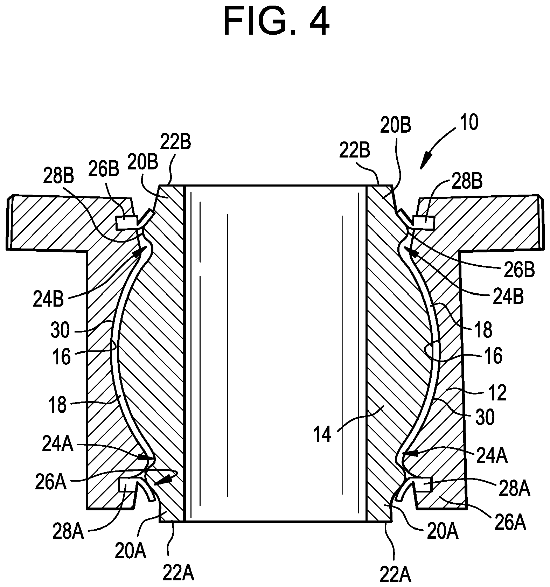

FIG. 4 is a cross sectional view of another embodiment of the bearing assembly of FIG. 1;
FIG. 5 is a cross sectional view of the bearing assembly of FIG. 2 wherein an inner member is misaligned in a first direction;
FIG. 5A is an enlarged view of an embodiment of the seal slidingly engaging a protrusion on the hub;
FIG. 6 is a cross sectional view of the bearing assembly of FIG. 2 wherein the inner member is misaligned in a second direction;

### DETAILED DESCRIPTION OF THE PREFERRED EMBODIMENT

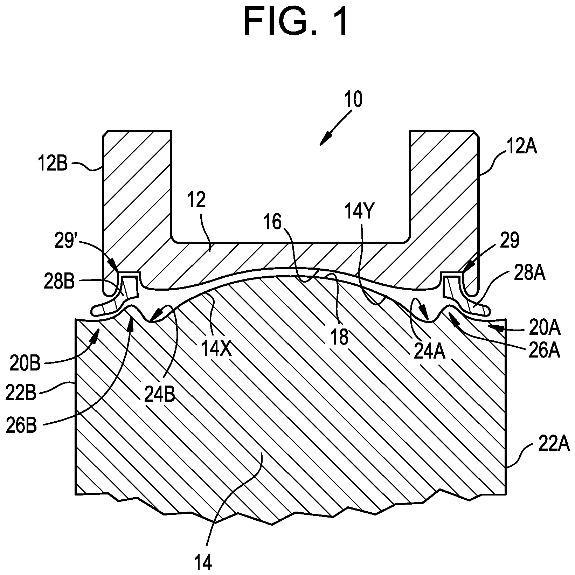

As shown in FIG. 1, a bearing assembly is generally designated by the numeral 10. The bearing assembly 10 includes an outer race 12 and an inner member 14. The inner member 14 is disposed partially in the outer race 12. The outer race 12 has an arcuate inner surface 16. The outer race 12 extends between a first axial end 12A and a second axial end 12B. The inner member 14 has an arcuate outer surface 18. The inner member 14 includes a hub 20A (discussed further herein) which extends axially outward from an axial side 14Y of the inner member 14 and terminates at an axial end 22A of the inner member 14. The inner member 14 includes a hub 20B (discussed further herein) which extends axially outward from an axial side 14X of the arcuate outer surface 18 of the inner member 14 and terminates at an axial end 22B of the inner member 14.

As shown in FIG. 1, the inner member 14 includes two circumferentially extending surface depressions 24A and 24B. Each of the circumferentially extending surface depressions 24A and 24B is positioned on the respective hub 20A, 20B proximate the respective axial side 14X, 14Y of the arcuate outer surface 18. The circumferentially extending surface depressions 24A and 24B have an arcuate base portion. Although two circumferentially extending surface depressions 24A and 24B are shown in FIG. 1, the present invention is not limited in this regard, as any suitable number of circumferentially extending surface depressions may be included, such as, but not limited to, two circumferentially extending surface depression on each axial side of the arcuate outer surface 18 of the inner member 14.

As shown in FIG. 1, the inner member 14 includes two circumferentially extending surface protrusions 26A and 26B. The circumferentially extending surface protrusion 26A is positioned on the hub 20A axially outward from the circumferentially extending surface depression 24A. The circumferentially extending surface protrusion 26A has an arcuate body portion. The circumferentially extending surface protrusion 26B is positioned on the hub 20B axially outward from the circumferentially extending surface depression 24B. In one embodiment, the circumferentially extending surface protrusion 26B has an arcuate body portion. Although two circumferentially extending surface protrusions 26A and 26B are shown in FIG. 1, the present invention is not limited in this regard, as any suitable number of circumferentially extending surface protrusions may be included, such as, but not limited to, four circumferentially extending surface protrusions on each axial side 14X and 14Y of the arcuate outer surface 18 of the inner member 14.

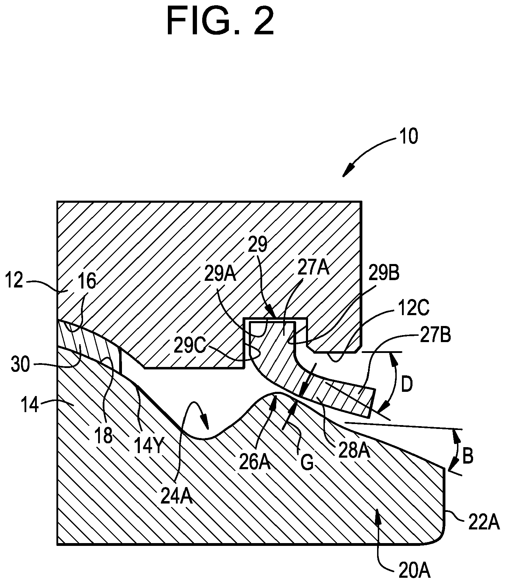

In one embodiment, as best shown in FIG. 2, the hub 20A tapers radially inward towards the axial end 22A of the inner member 14 at an angle β. Similarly, the hub 20B tapers radially inward towards the axial end 22B of the inner member 14 at an angle β. The configuration of the hubs 20A and 20B discussed herein mitigates entry of contaminants into the bearing assembly 10 by urging the contaminants to slide away from the arcuate outer surface 18 along the taper. As best shown in FIG. 2, a circumferentially extending groove 29 is formed in the outer race 12 proximate the first axial end 12A of the outer race. The groove 29 is defined by a radially inward facing base 29A which extends between two axial facing sidewalls 29B and 29C. As shown in FIG. 1, a similar groove is formed in the outer race proximate the second end 12B of the outer race 12.

As best shown in FIG. 2, a seal 28A is secured to the outer race 12 by the groove 29, proximate the first end 12A of the outer race 12. In particular, the seal 28A defines a base portion 27A and a flexible leg 27B extending outwardly from the base portion 27A. The base portion 27A is seated, for example, press fit, into the groove 29 such that the base portion 27A frictionally engages the base portion 29A and the side walls 29C and 29B (see FIG. 2) of the groove 29. The leg 27B is configured in a shape complementary to a portion of the hub 20A, for example the protrusion 26A. The base portion 27A and the flexible leg 27B are flexible. Another seal 28B is secured in a predetermined position to the outer race 12 in a groove 29' in a similar manner (see FIG. 1). The seals 28A and 28B are held in the predetermined position by the respective base portions 27A being seated in the respective groove 29. In the predetermined position the leg 27B extends axially outward and radially inward relative to a radially inward face 12C of the outer race 12 at an angle D.

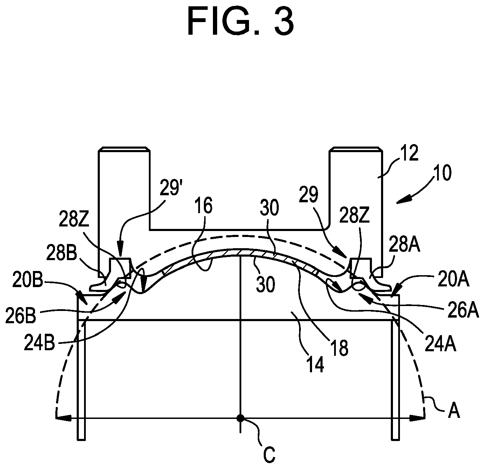

As shown in FIG. 3, the origin of the bearing 10 or the center point, indicated by the point C, is the center of rotation of the inner member 14. In one embodiment, there is space or gap G (see FIG. 2) between the outer surface of the protrusion 26A and an inner surface 28Z of the flexible leg 27B of the seal 28A. A similar space or gap G exists between the inner surface 28Z of the flexible leg 27B and the protrusion 26B. Both the protrusions 26A and 26B and the seals 28A and 28B (i.e., the first end 27A and the second end 27B) have the same point of rotation C as the bearing 10. The space or gap G between the surface protrusion 26A, 26B and the seal 28A, 28B is maintained when the bearing is out of alignment with the outer race 12 along the arcuate path A indicated by the curved dashed arrow A. In one embodiment, the seal is radially deflectable by the circumferentially extending surface protrusion 26A, 26B in response to misalignment of the inner member relative to the outer race. This prevents the surfaces from touching the respective seal 28A, 28B. There is no contact between the first end 27A of the seal 28A and the inner member 14, the outer surface 18, or the surface protrusion 26A. There is no contact between the first end 27A of the seal 28B and the inner member 14, the outer surface 18, or the surface protrusion 26B.

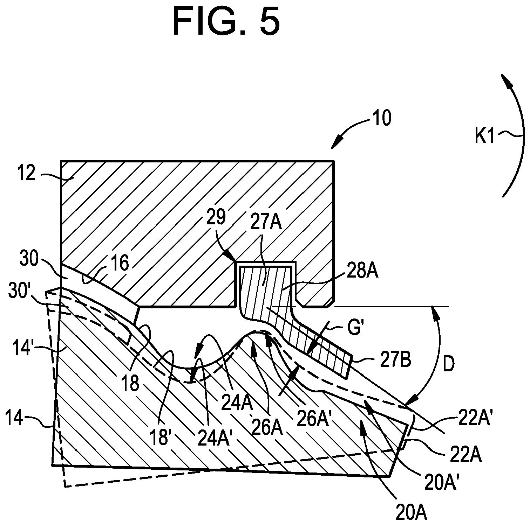

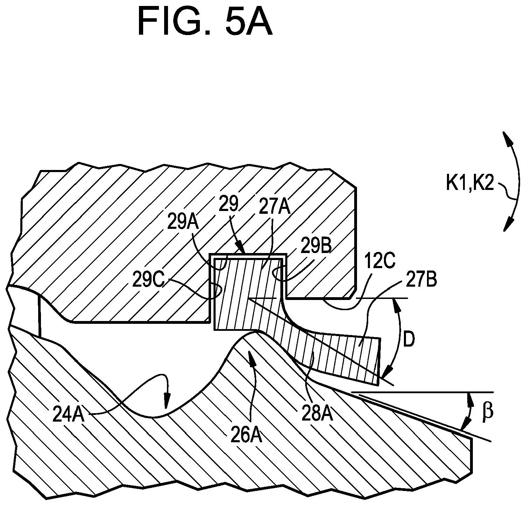

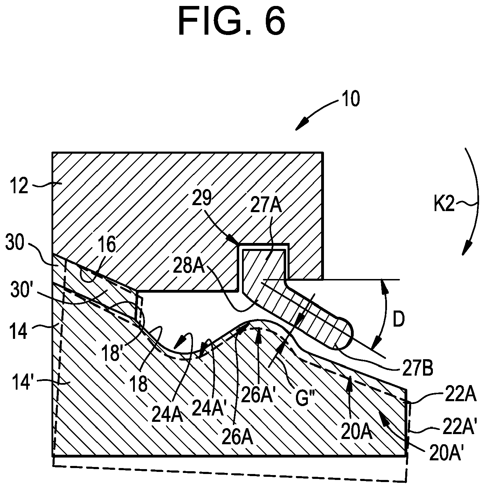

In one embodiment, as shown in FIGS. 5 and 6, the inner member 14 is misalignable relative to the outer race 12 along the arcuate path A (see FIG. 3) indicated by the curved dashed arrow A. The circumferentially extending surface protrusions 26A and 26B are positioned spaced apart from the respective seal 28A by the space or gap G so that the seal remains in the predetermined position. A similar space or gap G exists between the inner surface 28Z of the flexible leg 27B and the protrusion 26B. As shown in FIG. 5, when the inner member 14 is misaligned in a first direction, wherein the inner member along with the circumferentially extending surface protrusion 26A is displaced in the direction annotated by the arrow K1, the inner member 14' does not displace or deflect the leg 27B of the seal 28A and the gap G' is about equal to the gap F due to the tapering of the hub 20A'. As shown in FIG. 6, when the inner member 14 is misaligned in a second direction, wherein the inner member along with the circumferentially extending surface protrusion 26A is displaced in the direction annotated by the arrow K2, the seal 28A does not contact the inner member 14'or the hub, and the gap G" is about equal to the gap G..

As shown in FIG. 3 the bearing assembly 10 has a center point C. The circular arc A is concentric about the center point C. The seals 28A and 28B are positioned along the arc A. The circumferentially extending surface protrusions 26A and 26B are positioned along the arc A. Positioning both the seals 28A and 28B and the circumferentially extending surface protrusions 26A and 26B along the arc A allows the inner member 14 to misalign without the circumferentially extending surface protrusions 26A and 26B axially displacing the seals 28A and 28B. The space or gap G between the surfaces of the circumferentially extending surface protrusion 26A, 26B and the respective surfaces of the seal 28A, 28B is maintained when the bearing is misaligned (see FIG. 2). This prevents the two surfaces from touching each other, and the seal 28A, 28B remains in the predetermined position during the misalignment of the inner member 14 relative to the outer race 12. The circumferentially extending surface protrusions 26A and 26B provide support for the seals 28A and 28B in the event that the seals receive a force imparted thereon, for example from the outer race 12. In addition, the circumferentially extending surface protrusions 26A and 26B prevent the seals from being drawn into the bearing. The circumferentially extending surface protrusions 26A and 26B provide a barrier to preclude entry of contaminants into the bearing.

As shown in FIG. 5A, in one embodiment, the seal 28A, 28B slidingly engages the respective surface protrusion 26A, 26B and the seal 28A, 28B remains in the predetermined position during the misalignment of the inner member relative to the outer race 12. An area of the surface protrusion 26A, 26B, for example, the area 91, is in sliding engagement with the seal 28A, 28B.

In one embodiment, as best shown in FIG. 3, a liner 30 (e.g., a self lubricating liner) is positioned between the outer surface 18 and the inner surface 16. The liner reduces friction between the outer surface 18 and the inner surface 16. In one embodiment, the seal 28A, 28B is radially deflectable by the circumferentially extending surface protrusion 26A, 26B in response to misalignment of the inner member 14 relative to the outer race 12.

Although the present invention has been disclosed and described with reference to certain embodiments thereof, it should be noted that other variations and modifications may be made, and it is intended that the following claims cover the variations and modifications within the scope of the claims.

## Claims

1. A bearing assembly (10) comprising:
a center point (C) and a circular arc (A) concentric about the center point (C);
an outer race (12) having an arcuate inner surface (16), a circumferentially extending groove (29, 29') is formed in the outer race (12) proximate a first axial end (12A, 12B) of the outer race, the groove having a radially inward facing base (29A); and
an inner member (14) being at least partially disposed in the outer member, the inner member having:
an arcuate outer surface (18); and
at least one hub (20A, 20B) extending axially outward from an axial side (14X, 14Y) of the inner member (14) and terminating at an axial end (22A) of the inner member (14), the at least one hub having:
at least one circumferentially extending surface depression (24A, 24B) positioned on the at least one hub (20A, 20B) proximate the axial side (14X, 14Y), the circumferentially extending surface depressions (24A, 24B) having an arcuate base portion;
at least one circumferentially extending surface protrusion (26A, 26B) positioned on the at least one hub (20A) axially outward from the at least one circumferentially extending surface depression (24A, 24B), the circumferentially extending surface protrusion (26A) having an arcuate body portion;
a seal (28A, 28B) comprising a base portion (27A) and a flexible leg (27B) extending outwardly from the base portion (27A), the flexible leg having a shape complementary to that of the circumferentially extending surface protrusion (26A, 26B), the base portion being seated in the groove (29, 29') to secure the seal to the outer race (12) in a predetermined position such that the flexible leg (27B) extends axially outward beyond the at least one circumferentially extending surface protrusion (26A, 26B), in the predetermined position the flexible leg (27B) extends axially outward and radially inward relative to a radially inward face (12C) of the outer race (12), the seal being in sliding engagement with the at least one circumferentially extending surface protrusion; and
the seal (28A, 28B) being positioned along the arc (A) and the circumferentially extending surface protrusion (26A, 26B) being positioned along the arc (A) so that the seal maintains the predetermined position without axially displacing the seal (28A, 28B) during misalignment of the inner member relative to the outer member.

2. The bearing assembly of claim 1, wherein the at least one hub (20A, 20B) tapers radially inward toward an axial end (22A, 22B) of the inner member (14).

3. The bearing assembly of claim 1, wherein the seal (28A, 28B) is held in place by a force exerted by the outer race (12).

4. The bearing assembly of claim 1, wherein a liner (30) is positioned between the outer surface (18) and the inner surface (16).

5. A bearing assembly (10) comprising:
a center point (C) and a circular arc (A) concentric about the center point (C);
an outer race (12) having an arcuate inner surface (16), a circumferentially extending groove (29, 29') is formed in the outer race (12) proximate a first axial end (12A, 12B) of the outer race, the groove having a radially inward facing base (29A); and
an inner member (14) being at least partially disposed in the outer member, the inner member having:
an arcuate outer surface (18); and
at least one hub (20A, 20B) extending axially outward from an axial side (14X, 14Y) of the inner member (14) and terminating at an axial end (22A) of the inner member (14), the at least one hub having:
at least one circumferentially extending surface depression (24A, 24B) positioned on the at least one hub (20A, 20B) proximate the axial side (14X, 14Y), the circumferentially extending surface depressions (24A, 24B) having an arcuate base portion;
at least one circumferentially extending surface protrusion (26A, 26B) positioned on the at least one hub (20A) axially outward from the at least one circumferentially extending surface depression (24A, 24B), the circumferentially extending surface protrusion (26A) having an arcuate body portion;
a seal (28A, 28B) comprising a base portion (27A) and a flexible leg (27B) extending outwardly from the base portion (27A), the flexible leg having a shape complementary to that of the circumferentially extending surface protrusion (26A, 26B), the base portion being seated in the groove (29, 29') to secure the seal to the outer race (12) in a predetermined position such that the flexible leg (27B) extends axially outward beyond the at least one circumferentially extending surface protrusion (26A, 26B), in the predetermined position the flexible leg (27B) extends axially outward and radially inward relative to a radially inward face (12C) of the outer race (12), the seal being spaced apart from the at least one circumferentially extending surface protrusion; and
the seal (28A, 28B) being positioned along the arc (A) and the circumferentially extending surface protrusion (26A, 26B) being positioned along the arc (A) so that the seal maintains the predetermined position without axially displacing the seal (28A, 28B) during misalignment of the inner member relative to the outer member.

6. The bearing assembly of claim 5, wherein the at least one hub (20A, 20B) tapers radially inward toward an axial end (22A, 22B) of the inner member (14).

7. The bearing assembly of claim 5, wherein a liner (30) is positioned between the outer surface (18) and the inner surface (16).

## Patentansprüche

1. Lageranordnung (10), umfassend:
einen Mittelpunkt (C) und einen um den Mittelpunkt (C) konzentrischen Kreisbogen (A);
einen Außenring (12) mit einer bogenförmigen Innenfläche (16), wobei im Außenring (12) nahe einem ersten axialen Ende (12A, 12B) des Außenrings eine umlaufend verlaufende Nut (29, 29') ausgebildet ist, wobei die Nut einen radial nach innen gewandten Boden (29A) aufweist; und
ein Innenelement (14), das zumindest teilweise im Außenelement angeordnet ist, wobei das Innenelement Folgendes aufweist:
eine bogenförmige Außenfläche (18); und
zumindest eine Nabe (20A, 20B), die von einer axialen Seite (14X, 14Y) des Innenelements (14) axial nach außen verläuft und an einem axialen Ende (22A) des Innenelements (14) endet, wobei die zumindest eine Nabe Folgendes aufweist:
zumindest eine umlaufend verlaufende Oberflächenvertiefung (24A, 24B), die an der zumindest einen Nabe (20A, 20B) nahe der axialen Seite (14X, 14Y) positioniert ist, wobei die umlaufend verlaufenden Oberflächenvertiefungen (24A, 24B) einen bogenförmigen Bodenabschnitt aufweisen;
zumindest eine umlaufend verlaufende Obqerflächenprotrusion (26A, 26B), die an der zumindest einen Nabe (20A) axial nach außen von der zumindest einen umlaufend verlaufenden Oberflächenvertiefung (24A, 24B) positioniert ist, wobei die umlaufend verlaufende Oberflächenprotrusion (26A) einen bogenförmigen Körperabschnitt aufweist;
eine Dichtung (28A, 28B), die einen Bodenabschnitt (27A) und einen vom Bodenabschnitt (27A) nach außen verlaufenden flexiblen Schenkel (27B) umfasst, wobei der flexible Schenkel eine Form aufweist, die zu der der umlaufend verlaufenden Oberflächenprotrusion (26A, 26B) komplementär ist, wobei der Bodenabschnitt in der Nut (29, 29') sitzt, um die Dichtung am Außenring (12) in einer vorbestimmten Position zu sichern, sodass der flexible Schenkel (27B) über die zumindest eine umlaufend verlaufende Oberflächenprotrusion (26A, 26B) hinaus axial nach außen verläuft, wobei in der vorbestimmten Position der flexible Schenkel (27B) axial nach außen und radial nach innen in Bezug auf eine radial nach innen gewandte Seite (12C) des Außenrings (12) verläuft, wobei die Dichtung in gleitendem Eingriff mit der zumindest einen umlaufend verlaufenden Oberflächenprotrusion steht; und
wobei die Dichtung (28A, 28B) entlang des Bogens (A) positioniert ist und die umlaufend verlaufende Oberflächenprotrusion (26A, 26B) entlang des Bogens (A) positioniert ist, sodass die Dichtung die vorbestimmte Position hält, ohne die Dichtung (28A, 28B) während eines Versatzes des Innenelements in Bezug auf das Außenelement axial zu verlagern.

2. Lageranordnung nach Anspruch 1, wobei sich die zumindest eine Nabe (20A, 20B) radial nach innen zu einem axialen Ende (22A, 22B) des Innenelements (14) verjüngt.

3. Lageranordnung nach Anspruch 1, wobei die Dichtung (28A, 28B) durch eine durch den Außenring (12) ausgeübte Kraft in Position gehalten wird.

4. Lageranordnung nach Anspruch 1, wobei zwischen der Außenfläche (18) und der Innenfläche (16) eine Buchse (30) positioniert ist.

5. Lageranordnung (10), umfassend:
einen Mittelpunkt (C) und einen um den Mittelpunkt (C) konzentrischen Kreisbogen (A);
einen Außenring (12) mit einer bogenförmigen Innenfläche (16), wobei im Außenring (12) nahe einem ersten axialen Ende (12A, 12B) des Außenrings eine umlaufend verlaufende Nut (29, 29') ausgebildet ist, wobei die Nut einen radial nach innen gewandten Boden (29A) aufweist; und
ein Innenelement (14), das zumindest teilweise im Außenelement angeordnet ist, wobei das Innenelement Folgendes aufweist:
eine bogenförmige Außenfläche (18); und
zumindest eine Nabe (20A, 20B), die von einer axialen Seite (14X, 14Y) des Innenelements (14) axial nach außen verläuft und an einem axialen Ende (22A) des Innenelements (14) endet, wobei die zumindest eine Nabe Folgendes aufweist:
zumindest eine umlaufend verlaufende Oberflächenvertiefung (24A, 24B), die an der zumindest einen Nabe (20A, 20B) nahe der axialen Seite (14X, 14Y) positioniert ist, wobei die umlaufend verlaufenden Oberflächenvertiefungen (24A, 24B) einen bogenförmigen Bodenabschnitt aufweisen;
zumindest eine umlaufend verlaufende Oberflächenprotrusion (26A, 26B), die an der zumindest einen Nabe (20A) axial nach außen von der zumindest einen umlaufend verlaufenden Oberflächenvertiefung (24A, 24B) positioniert ist, wobei die umlaufend verlaufende Oberflächenprotrusion (26A) einen bogenförmigen Körperabschnitt aufweist;
eine Dichtung (28A, 28B), die einen Bodenabschnitt (27A) und einen vom Bodenabschnitt (27A) nach außen verlaufenden flexiblen Schenkel (27B) umfasst, wobei der flexible Schenkel eine Form aufweist, die zu der der umlaufend verlaufenden Oberflächenprotrusion (26A, 26B) komplementär ist, wobei der Bodenabschnitt in der Nut (29, 29') sitzt, um die Dichtung am Außenring (12) in einer vorbestimmten Position zu sichern, sodass der flexible Schenkel (27B) über die zumindest eine umlaufend verlaufende Oberflächenprotrusion (26A, 26B) hinaus axial nach außen verläuft, wobei in der vorbestimmten Position der flexible Schenkel (27B) axial nach außen und radial nach innen in Bezug auf eine radial nach innen gewandte Seite (12C) des Außenrings (12) verläuft, wobei die Dichtung von der zumindest einen umlaufend verlaufenden Oberflächenprotrusion beabstandet ist; und
wobei die Dichtung (28A, 28B) entlang des Bogens (A) positioniert ist und die umlaufend verlaufende Oberflächenprotrusion (26A, 26B) entlang des Bogens (A) positioniert ist, sodass die Dichtung die vorbestimmte Position hält, ohne die Dichtung (28A, 28B) während eines Versatzes des Innenelements in Bezug auf das Außenelement axial zu verlagern.

6. Lageranordnung nach Anspruch 5, wobei sich die zumindest eine Nabe (20A, 20B) radial nach innen zu einem axialen Ende (22A, 22B) des Innenelements (14) verjüngt.

7. Lageranordnung nach Anspruch 5, wobei zwischen der Außenfläche (18) und der Innenfläche (16) eine Buchse (30) positioniert ist.

## Revendications

1. Ensemble de palier (10) comprenant :
un point central (C) et un arc de cercle (A) concentrique autour du point central (C) ;
une rigole extérieure (12) ayant une surface intérieure arquée (16), une rainure s'étendant circonférentiellement (29, 29') est formée dans la rigole extérieure (12) à proximité d'une première extrémité axiale (12A, 12B) de la rigole extérieure, la rainure ayant une base faisant face radialement vers l'intérieur (29A) ; et
un élément intérieur (14) étant au moins partiellement disposé dans l'élément extérieur, l'élément intérieur ayant :
une surface extérieure arquée (18) ; et
au moins un moyeu (20A, 20B) s'étendant axialement vers l'extérieur depuis un côté axial (14X, 14Y) de l'élément intérieur (14) et se terminant à une extrémité axiale (22A) de l'élément intérieur (14), le au moins un moyeu ayant :
au moins une dépression de surface s'étendant circonférentiellement (24A, 24B) positionnée sur le au moins un moyeu (20A, 20B) à proximité du côté axial (14X, 14Y), les dépressions de surface s'étendant circonférentiellement (24A, 24B) ayant une partie de base arquée ;
au moins une saillie de surface s'étendant circonférentiellement (26A, 26B) positionnée sur le au moins un moyeu (20A) axialement vers l'extérieur depuis la au moins une dépression de surface s'étendant circonférentiellement (24A, 24B), la saillie de surface s'étendant circonférentiellement (26A) ayant une partie de corps arquée ;
un joint (28A, 28B) comprenant une partie de base (27A) et une branche flexible (27B) s'étendant vers l'extérieur depuis la partie de base (27A), la branche flexible ayant une forme complémentaire à celle de la saillie de surface s'étendant circonférentiellement (26A, 26B), la partie de base étant logée dans la rainure (29, 29') pour fixer le joint à la rigole extérieure (12) dans une position prédéterminée de sorte que la branche flexible (27B) s'étend axialement vers l'extérieur au-delà de la saillie de surface s'étendant circonférentiellement (26A, 26B), dans la position prédéterminée, la branche flexible (27B) s'étend axialement vers l'extérieur et radialement vers l'intérieur par rapport à une face radialement intérieur (12C) de la rigole extérieure (12), le joint venant en prise de manière coulissante avec la au moins une saillie de surface s'étendant circonférentiellement ; et
le joint (28A, 28B) étant positionné le long de l'arc (A) et la saillie de surface s'étendant circonférentiellement (26A, 26B) étant positionnée le long de l'arc (A) de sorte que le joint maintient la position prédéterminée sans déplacer axialement le joint (28A, 28B) pendant un désalignement de l'élément intérieur par rapport à l'élément extérieur.

2. Ensemble de palier selon la revendication 1, dans lequel le au moins un moyeu (20A, 20B) se rétrécit radialement vers l'intérieur en direction d'une extrémité axiale (22A, 22B) de l'élément intérieur (14).

3. Ensemble de palier selon la revendication 1, dans lequel le joint (28A, 28B) est maintenu en place par une force exercée par la rigole extérieure (12).

4. Ensemble de palier selon la revendication 1, dans lequel un revêtement (30) est positionné entre la surface extérieure (18) et la surface intérieure (16).

5. Ensemble de palier (10) comprenant :
un point central (C) et un arc de cercle (A) concentrique autour du point central (C) ;
une rigole extérieure (12) ayant une surface intérieure arquée (16), une rainure s'étendant circonférentiellement (29, 29') est formée dans la rigole extérieure (12) à proximité d'une première extrémité axiale (12A, 12B) de la rigole extérieure, la rainure ayant une base faisant face radialement vers l'intérieur (29A) ; et
un élément intérieur (14) étant au moins partiellement disposé dans l'élément extérieur, l'élément intérieur ayant :
une surface extérieure arquée (18) ; et
au moins un moyeu (20A, 20B) s'étendant axialement vers l'extérieur depuis un côté axial (14X, 14Y) de l'élément intérieur (14) et se terminant à une extrémité axiale (22A) de l'élément intérieur (14), le au moins un moyeu ayant :
au moins une dépression de surface s'étendant circonférentiellement (24A, 24B) positionnée sur le au moins un moyeu (20A, 20B) à proximité du côté axial (14X, 14Y), les dépressions de surface s'étendant circonférentiellement (24A, 24B) ayant une partie de base arquée ;
au moins une saillie de surface s'étendant circonférentiellement (26A, 26B) positionnée sur le au moins un moyeu (20A) axialement vers l'extérieur depuis la au moins une dépression de surface s'étendant circonférentiellement (24A, 24B), la saillie de surface s'étendant circonférentiellement (26A) ayant une partie de corps arquée ;
un joint (28A, 28B) comprenant une partie de base (27A) et une branche flexible (27B) s'étendant vers l'extérieur depuis la partie de base (27A), la branche flexible ayant une forme complémentaire à celle de la saillie de surface s'étendant circonférentiellement (26A, 26B), la partie de base étant logée dans la rainure (29, 29') pour fixer le joint à la rigole extérieure (12) dans une position prédéterminée de sorte que la branche flexible (27B) s'étend axialement vers l'extérieur au-delà de la saillie de surface s'étendant circonférentiellement (26A, 26B), dans la position prédéterminée, la branche flexible (27B) s'étend axialement vers l'extérieur et radialement vers l'intérieur par rapport à une face radialement intérieur (12C) de la rigole extérieure (12), le joint étant espacé de la au moins une saillie de surface s'étendant circonférentiellement ; et
le joint (28A, 28B) étant positionné le long de l'arc (A) et la saillie de surface s'étendant circonférentiellement (26A, 26B) étant positionnée le long de l'arc (A) de sorte que le joint maintient la position prédéterminée sans déplacer axialement le joint (28A, 28B) pendant un désalignement de l'élément intérieur par rapport à l'élément extérieur.

6. Ensemble de palier selon la revendication 5, dans lequel le au moins un moyeu (20A, 20B) se rétrécit radialement vers l'intérieur en direction d'une extrémité axiale (22A, 22B) de l'élément intérieur (14).

7. Ensemble de palier selon la revendication 5, dans lequel un revêtement (30) est positionné entre la surface extérieure (18) et la surface intérieure (16).
